# EUROPEAN PATENT APPLICATION

(11) **EP 1 785 799 A2**
(43) Date of publication of application: **16.05.2007**
(21) Application number: 06124003.2
(22) Date of filing: 14.11.2006
(51) Int. Cl.: G05D 1/00

(54) **Integrating avionics system with single event upset autonomous recovery**

(30) Priority: 14.11.2005 US 272997
(71) Applicant: Honeywell International Inc., Morristown, NJ 07962 (US)
(72) Inventor: Broderick, James B., Maple Grove, MN 55369 (US); Concannon, Ian P., Coons Rapids, MN 55433 (US)
(74) Representative: Haley, Stephen

(57) **Abstract**

A novel system and method for detecting and recovering from single event upsets in integrating processing systems are presented. Two delta value processing lanes may be utilized to process raw data from inertial sensors. The output of the two processing lanes may be compared to detect the presence of an SEU. If an error is detected, a previously stored set of delta values may be utilized by the system. Additionally, the system may contain a temporary buffer to store calculated delta values in the event of a processor reset caused by an SEU or other error. The temporary buffer may store delta values accumulated during the processor reset and may furnish these stored delta values to the processor once it has finished resetting. The stored delta values may then be batch-processed and applied to system state values saved to memory prior to the processor reset.

## Description

The present invention relates to avionics navigation systems. More specifically, the present invention relates to avionics navigation systems with integrating functions and the ability to automatically detect and recover from single event upset (SEU) errors with little or no loss of data.

When piloting an aircraft, it is often of great benefit to the pilot to be aware of the current states and conditions of the aircraft including position, bearing, and attitude. Generally, an aircraft will contain several avionic navigational systems that have the ability to measure or compute these states and present them to the pilot in a usable format. Avionic navigational systems generally may comprise at least one air data and inertial reference system (ADIRS) comprising three air data and inertial reference units (ADIRU), each of which are capable of generating navigation- and attitude-related data concerning the aircraft, such as heading, altitude, air speed, pitch, yaw and the like, The measurement of this data may be divided between two components within the ADIRU, with an air data reference (ADR) system providing stateless data such as airspeed and altitude, and an inertial reference system (IRS) providing the attitude data.

Prior to motion of the aircraft or other vehicle to which the ADIRU is coupled, the IRS will initialize using a self-alignment process that establishes a relationship between the coordinates of a body frame and a local geographic reference frame. During this process, which generally requires the system to remain stationary for an extended period of time, the device establishes a local level coordinate frame by using sensed acceleration to align its vertical axis (called leveling) and measuring the horizontal earth rate to determine the initial azimuth (called gyrocompassing). The transformation matrices used to translate between the body frame and the local level frame, and between the local level frame and the geographic frame, are also initialized during the self-alignment process. In addition, local latitude and longitude of the unit can be initialized during the alignment process either by pilot entry or from a global positioning system (GPS). When the system has finished the self-alignment process, it will have initialized values for the inertial reference state data, which includes the pitch angle, roll angle, heading angle, latitude, longitude, ground speed, track angle, vertical speed, altitude, and the transformation matrices.

Upon completion of the self-alignment process, the IRS may enter a navigation mode in which it determines the attitude of the ADIRU and provides this information to a user via a graphical interface. Using three accelerometers, each aligned to a spatial dimension axis, the IRS can measure acceleration rates experienced by the system, which include both the magnitude and direction of the acceleration. Additionally, using three gyroscopes, again with each aligned to a spatial dimension axis, the IRS can measure rotational rates in the system, which may include the both the magnitude and direction of rotation, The rotational rates and acceleration rates measured by the IRS sensors can then be incrementally integrated to determine changes in the velocity (referred to as "delta velocities") and changes in the rotational angle (referred to as "delta thetas"), respectively. By applying the delta velocity and delta theta values to the inertial reference state values, the system may be used to continually determine the relationship between the body frame and the local level coordinate frame, and likewise between the local level frame and the geographical reference coordinate frame. As a result, the ADIRU may be considered an integrating processing system.

In general, vehicles that utilize an ADIRS may operate at relatively high altitudes that are less shielded from cosmic radiation and high energy particles- Primary and secondary radiation effects from high energy particles can cause transient disturbances, or glitches, in susceptible circuit components, such as the kind that may be utilized by ADIRU processing units. When an energetic particle strikes a transistor region in a circuit, a parasitic conduction path can be created, which may cause a false transition on a node. The false transition, or glitch, can propagate through the circuit and may ultimately result in the disturbance of a node containing state information, such as an output of a latch, register, or gate. The disturbance of a state node is commonly referred to as a single event upset (SEU).

Field programmable gate arrays, which may act as memory registers in processing systems, may be especially susceptible to SEU disturbances and the result may be a localized hardware error resulting in incorrect value being produced by the system. Because the IRS incorporates delta velocity and delta theta values into the inertial reference state values in order to determine changes in the attitude of the system, the current state of the system is dependent on previous states. As a result, an incorrect delta velocity or delta theta value incorporated into the set of state values may adversely affect all future system states. Additional, even if incorrect delta velocity or delta theta values resulting from an SEU or multiple bit upset (MBU) are detected and dropped from the processing stream, extended periods of lost data or an increased data loss frequency may result in adverse behaviors that are unacceptable per system safety assessment analyses.

Additionally, SEU errors may affect critical system software resources, such as operating systems, leading to a system-wide restart. In this case, any integrating systems may loose several second's worth of measured data from the sensors. As a result, these systems may be unable to recover from the error without a re-initialization procedure that may or may not be performable while the ADIRS is in motion.

As a result, it would be desirable to have a system that is capable of detecting the effects of single event upsets on delta velocity and delta theta values prior to their being processed by the IRS unit. Additionally, it would be desirable for the system to be capable of recovering from these errors with little or no loss of navigational data. Finally, it would be desirable for a system to be able to recover from an error-induced restart without a loss of the data measured during the restart period.

### In the Drawings:

Exemplary embodiments of the invention are described below in conjunction with the appended figures, wherein like reference numerals refer to like elements in the various figures, and wherein:
Figure 1 is a schematic of an integrating processing system, such as an inertial reference system (IRS) in an air data and inertial reference system (ADIRS), that is capable of detecting and recovering from single event upset (SEU) errors in the processing lanes, according to an embodiment;
Figure 2 is a process by which SEU errors in the delta value processing lanes of an integrating processing system may be detected and recovered from, according to an embodiment;
Figure 3 is a process by which SEU errors in an integrating processing system may be detected and recovered from, and by which the number and frequency of these errors may be tracked, according to an embodiment;
Figure 4 is a schematic of a configuration in an integrating processing system that permits a system to recover without loss of data from a processor reset, according to an embodiment;
Figure 5 is a process by which an integrating processing system may recover without loss of data from a processor reset, according to an embodiment;
Figure 6 is a process by which an integrating processing system may recover without loss of data from a processor reset and track the number of processor resets, according to an embodiment; and
Figure 7 is a schematic of a configuration in an IRS that permits a system to detect and recover from SEU errors that either affect the processing lanes of an IRS, or cause a system processor to reset, according to embodiment.

The present invention involves a system and method for detecting and recovering from single event upset errors in inertial reference systems. In one aspect, the method comprises calculating delta values from raw sensor data using two separate delta value processing lanes. The delta values from the processing lanes may be compared to determine if a single event error has occurred in one of the processing lanes. If the delta values do not compare, or mis-compare, previously stored delta values may be used instead of the calculated delta values.

In another aspect of the invention, the method comprises utilizing a temporary buffer to store data in the event of an integrating processor reset, possibly caused by a single event upset. The integrating processor may be monitored to determine if it is currently being reset. If the integrating processor is undergoing a reset procedure, calculated delta values may be stored in the temporary buffer until the processor is finished resetting. After the processor has recovered, it may batch process the delta values stored in the temporary buffer and apply the results to stored state values.

In another aspect of the invention, the method comprises both calculating delta values using two separate processing lanes and activating a temporary buffer in the event of an integrating processor reset. After comparing the delta values from the two processing lanes, either previously stored delta values or data from either of the processing lanes may be sent to both the integrating processor and a temporary buffer. If the processor is resetting, the delta values may be stored in the temporary buffer until the integrating processor has recovered.

The present invention provides a framework for successfully detecting single event upset (SEU) errors in integrating processing systems, such as the inertial reference system (IRS) found in an air data and inertial reference system (ADIRS). The system may store reference state values in a local memory, where these values correspond to the current state of the system. Sensors connected to the system may periodically measure rates of change for each of the system states. These rates of change are processed into delta values that represent specific changes in corresponding state values over a given period. The present invention seeks to provide a system and method for successfully recovering from SEU errors with little to no loss of navigational data resulting from the processing of sensor data. The embodiments of the present invention provide this ability to handle SEU errors whether they occur in processing registers used to calculate delta values, or whether they result in the temporary loss of operating system software used to control advanced processor functions that process these delta values and apply them to reference state values.

In one embodiment of the present invention, an integrated avionics system is provided that is capable of detecting SEU errors in a delta value calculation process and can recover from these errors with little to no loss of data. The system generally comprises two separate delta value processing lanes and a comparator to determine if an SEU error has occurred. If an error has occurred the system may ignore the sampled data and may use a previously stored set of delta values for subsequent processing. Additionally, limits may be placed on the frequency of SEU errors and the total number of times an SEU error has occurred in the processing lanes of a system, such that if these limits are exceeded, the system may be shut down to prevent further adverse effects.

In another embodiment of the present invention, the system may be designed to detect and recover with minimal to no loss of data from an SEU event that affects the software operating system such that the processing capabilities of the IRS solution may be temporarily inhibited. Specifically, the system can continue to gather data from sensors while specific operating systems that control advanced processing functions are being reset. Generally the system may comprise a processor that receives data from one or more sensors and uses this data to update a series of integrating state values. These integrating state values may be used by an avionic system to determine the attitude of the system with respect to a fixed geographical plane. The system may also comprise a detection component that determines whether an operating system or processor has been forced to reset. This processor may then trigger a buffer system to begin buffering data measured by the various sensors in a data buffer. The detection component may then determine when the processing capability of the system has been restored and signal the buffer to send the accumulated data to the processor to be batch processed and determine a set of delta values that represent the change in state of the system during the reset. Once the processor has finished batch processing data from the buffer, the processor may then resume its normal functionality and may cease receiving data from the buffer. The integrating state values may then be updated using the determined delta values. As a result the system may recover with no or relatively little loss of state information, depending on the frequency with which state values are stored in memory.

In another embodiment of the invention, the system may be designed to detect and recover from SEU errors that impact both the delta value processing system and the software operating systems. This system may incorporate the modifications of both of the above embodiments, including a dual lane processing system for delta values and a buffering system to store data measured by external sensors during a system reset. In this embodiment, the data from the sensors may first be sent to dual processing lanes, each of which produces a set of delta values. These sets of delta values may be compared to determine if an error has occurred: if the sets of delta values do not match, then an SEU error can be inferred; otherwise it can be assumed that both sets of data are valid. If an SEU error is determined, a previously stored set of delta values may be sent for processing; otherwise either of the sets of delta values from the processing lanes may be sent for processing. If the processor unit that normally handles the set of delta values is currently being re-initialized or is otherwise unavailable, perhaps as a result of an SEU error, the delta values to be processed may be sent to a temporary buffer- The state of the processor unit may be determined by a process monitor, which may in turn communicate with a temporary buffer controller. Data may be stored in the temporary buffer until the processor has recovered from the SEU error and has resumed functionality, at which point the processor unit may then cease receiving data from the temporary buffer and can resume normal functionality.

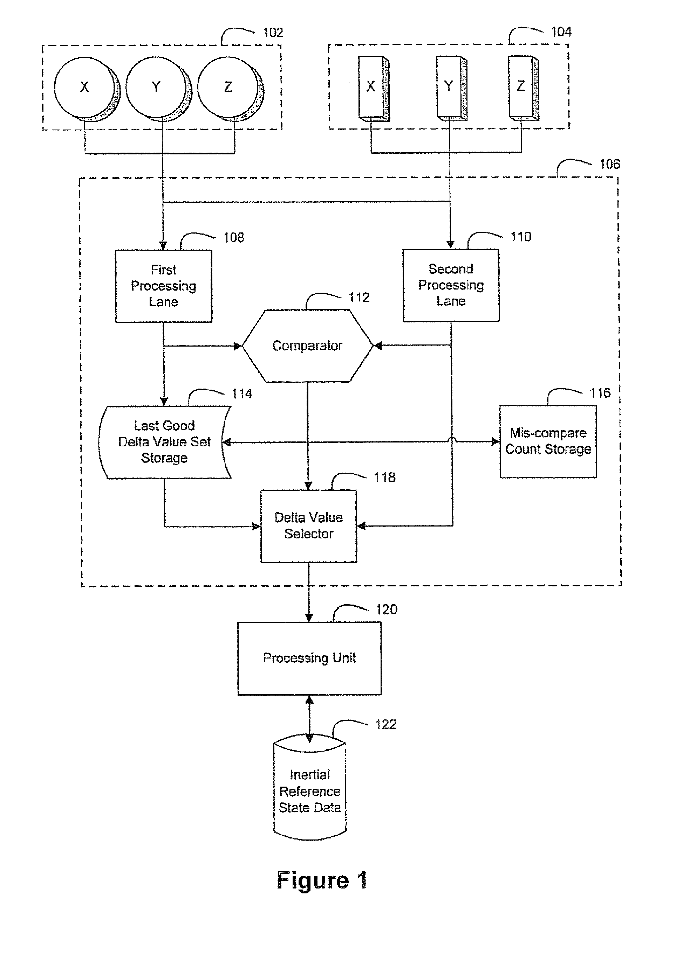

Figure 1 shows an integrating processing system with an SEU detection and recovery scheme comprising two sensor data processing lanes. The integrating processing system may be an IRS in an ADIRS, or other system that integrates input data at regular intervals. The system comprises one or more sets of sensors 102, 104, each of which may measure a rate of change in the various system states. One set of sensors may comprise three gyroscopes 102, each fixed along a different spatial axis, in order to measure the angular rotation of the system with respect to each spatial axis. These gyroscopes may be ring laser gyroscopes, or other type of device that can measure angular rotation along a spatial axis.

Another set of sensors may comprise three accelerometers 104, each fixed along a different spatial axis, in order to measure the linear acceleration of the system along each spatial axis. These accelerometers may be micro-electra-mechanical system (MEMS) devices, or another type of device that can measure linear acceleration. Data measurements from the sets of sensors 102, 104 may be sampled at a regular frequency, where the frequency has a corresponding regular period. Generally, this sampling frequency may be a relatively high rate, such as 800 Hz (1.25 ms period), to accurately sample the continuous data readings of the external sensors. The sampled data from these sensors may constitute a set of sensor data values corresponding to the measurements of all external sensors at a given moment Additionally, sensors 102 and/or 104 may be rate sensors or rate integrating sensors, for example. A rate sensor may supply delta velocity or delta theta over an interval. A rate integrating sensor, in contrast, may accumulate delta velocities or delta thetas over the same interval.

Each set of sensor data values may then be sent to two separate processing lanes 108, 110 within a delta value processing unit 106. Each of these processing lanes may independently calculate a set of delta values corresponding to a set of sensor data values. Delta values corresponding to measured angular rotational rates may be considered delta theta (Δθ) values, while delta values corresponding to measured linear acceleration rates may be considered delta velocity (Δv) values. The entire set of delta values may comprise three delta theta values and three delta velocity values in the case where the sensors 102, 104 comprise three gyroscopes and three accelerometers. The set of delta values may be determined by multiplying the linear acceleration and rotational rate data values from the sensors by the period of the sampling frequency. For example, an angular rate of 20 rad/s multiplied by a sampling period of 1.25 ms would generally produce a delta theta value of 25 mrad, while a linear acceleration rate of 10 m/s² at a sampling period of 1.25 ms would generally produce a delta velocity value of 12.5 mm/s. The delta velocity values represent the change in velocity of the system over the sampling period, while the delta theta values represent changes in the rotational bearing of the system over the sampling period.

Once each processing lane 108, 110 is finished calculating its set of delta values, these values are then sent to a comparator 112. The comparator compares the first set of delta values received from the first processing lane to the second set of delta values received from the second processing lane and generates a signal indicative of whether or not an SEU error has occurred. This signal is then sent to a delta value selector 118 that determines which set of delta values to forward to a processing unit 120. If the delta values in the first set of values are not equal to the corresponding delta values of the second set, then the comparator may generate a signal indicating that an SEU error has occurred in one of the processing lanes. Upon receiving this error signal, the delta value selector may select a previously calculated set of delta values stored in a last-known-good buffer 114. This buffered set of delta values represents the last set of delta values calculated by the processing lanes without an SEU error having been detected, or the last-known-good delta value set. This stored data may be replaced with a more recent set of valid data each time the sets of' delta values from the first processing lane and second processing lane are substantially equal. In the case that the delta values in the first set of values are substantially equal to the corresponding delta values in the second set, the comparator 112 may generate a signal indicating that no SEU error has occurred in either processing lane and that either set of delta values is valid. Upon receiving this signal, the delta value selector 118 may then select one of the sets of data values from either the first or second processing lane to send to the processing unit 120. Additionally, the signal generated by the comparator may be sent to the buffer 114 that contains the last-known-good delta value set. If the signal indicates that no error was detected, the set of delta values from either the first or second processing lane may be stored in the buffer, overwriting the previously stored set.

It should be noted that the processing lanes 108, 110 as well as the other components within delta value processing unit 106 should be designed so that the delta value processing unit 106 meets some minimum SEU failure probability rate. For example, the delta value processing unit 106 may be designed so that is has an overall SEU failure probability of 10⁻¹² per operational hour. Additionally, the SEU failure probability rate of the delta value processing unit 106 may be increased by cyclic redundancy check CRC, error detection error correction (EDEC), sumcheck bit, or some other means.

In one embodiment, the signal generated by the comparator may be sent to an error count unit 116, If the sets of delta values generated by the first and second processing lanes do not compare, or mis-compare, then a signal indicating this error may cause the error count unit 116 to adjust one or more count values- A total mis-compare count, or total error count, may be incremented by the error count unit 116 for each signal received from the comparator indicating a lane mis-compare. Additionally, a consecutive mis-compare count may be maintained. The consecutive mis-compare count may be incremented for each signal received from the comparator indicating a lane mis-compare, and may be cleared, or set to zero, for each signal received from the comparator indicating a match between the sets of delta values generated by each of the processing lanes 108, 110. Furthermore, stored within the error count unit 116 may be respective threshold values for the total mis-compare count and consecutive mis-conapare count. If either of these thresholds are met or exceeded, the system may generate a failure alert

The threshold values may be determined by the type of sensor used for sensor 102, 104. For example, a rate integrating sensor may be able to maintain accuracy over several missed intervals. A rate sensor, on the other hand, supplying delta velocity or delta theta over an interval, may lose the data that occurred over the interval when a mis-compare occurs. If the data is lost for a short interval it may be insignificant, as it pertains, for example, to meet technical standard order (ISO) attitude requirement. The threshold values, therefore, may be tailored to the type of sensor or attitude requirements.

As discussed above, the delta value set selected by the delta value set selector 118 is then provided to a processing unit 120. In one embodiment, the processing unit may retrieve system state values from an external storage device 122 and apply the delta value set to these state values. In the case of an ADIRS system, these state values may be inertial reference state data and may comprise frame coordinate transformation matrices, pitch angle, roll angle, heading angle, latitude, longitude, ground speed, track angle, vertical speed, altitude, and other attitude-related data. Once the state value date is retrieved and modified according to the delta theta values, it may be copied back to the storage device 122.

In another embodiment, the processing unit 120 may maintain a local list of state values. For each set of delta values received by the processing unit, the locally stored state values may be adjusted and then maintained locally. At regular intervals the state data may be stored in an external storage device 122. The frequency at which the state data is sent to an external storage device may be less than the sampling frequency of the measurement devices, since the state updates normally occur at rates much less than the sampling frequency. For example, if data from the sensors is sampled every 2.5 ms (400 Hz) then the system may send the current state data to an external memory device every 20 ms (50 Hz). The external memory device may comprise a dynamic random access memory (DRAM) device.

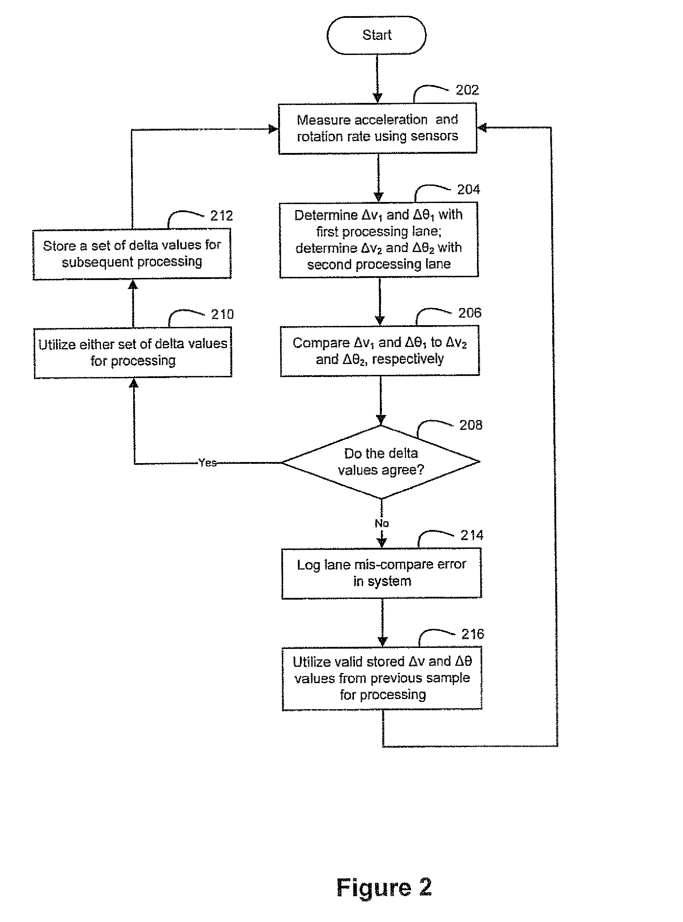

Figure 2 shows a process by which SEU errors may be detected and recovered from with relatively little loss of data in an IRS. Using external sensors, the acceleration and rotational rate of the system may be sampled 202 and sent to two separate processing lanes. A first set of delta values (Δv₁ and Δθ₁) may be calculated using a first processing lane and a second set of delta values (Δv₂ and Δθ₂) may be simultaneously calculated using a second processing lane 204. The corresponding data values in the first and second sets of delta values may then be compared to one another 206, and it may then be determined whether or not an SEU error has occurred based on this comparison. If the two sets of values do agree and are substantially equal 208, then either set of values may be sent to a processor to determine changes to the attitude of the vehicle to which the IRS is coupled 210. Additionally, if the two sets of values are substantially equal, then either set of values may be stored as the last-known-good set of delta values 212, If it determined that the delta values do not agree 208, then a lane mis-compare error may be logged in the system and the user may be notified of the presence of an SEU error 214. In order to prevent adverse effects, the last-known-good set of delta values may be used in place of the currently calculated set of delta values 216. The system may process the next set of sampled data in a similar manner.

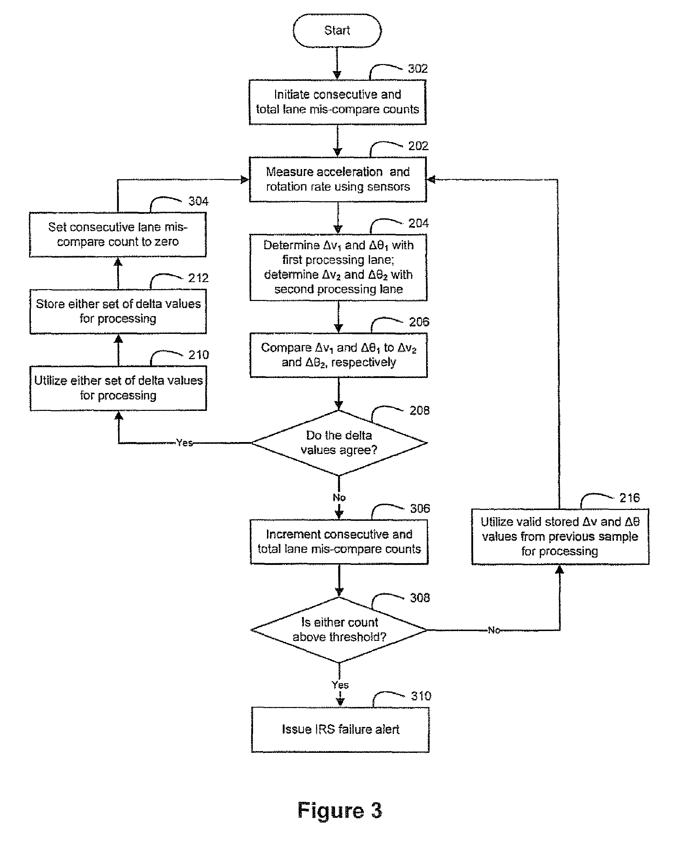

Figure 3 shows a process by which SEU errors may be detected and recovered from with minor effects in an IRS, wherein the process also includes limits on the number of lane mis-compares that may be encountered by a system. The system is similar to the process of Figure 2 but includes several additional steps that permit the number of lane mis-compares to be monitored and compared to various thresholds. These thresholds may be used to limit both consecutive and total mis-compares. When the system is undergoing its initialization process, a consecutive mis-compare count and a total mis-compare count may be initialized to a value of zero 302. If the first set of delta values does not agree with the second set of delta values 208, then both the consecutive mis-compare count and the total mis-compare count may be incremented 306. After these counts have been modified, they may each be compared to respective threshold values 308. If either count exceeds this threshold, then an IRS failure alert may be issued to the user, indicating that the particular IRS has become unreliable. Alternatively, if the first and second sets of delta values are substantially equal, then the consecutive lane mis-compare count may be reset to zero.

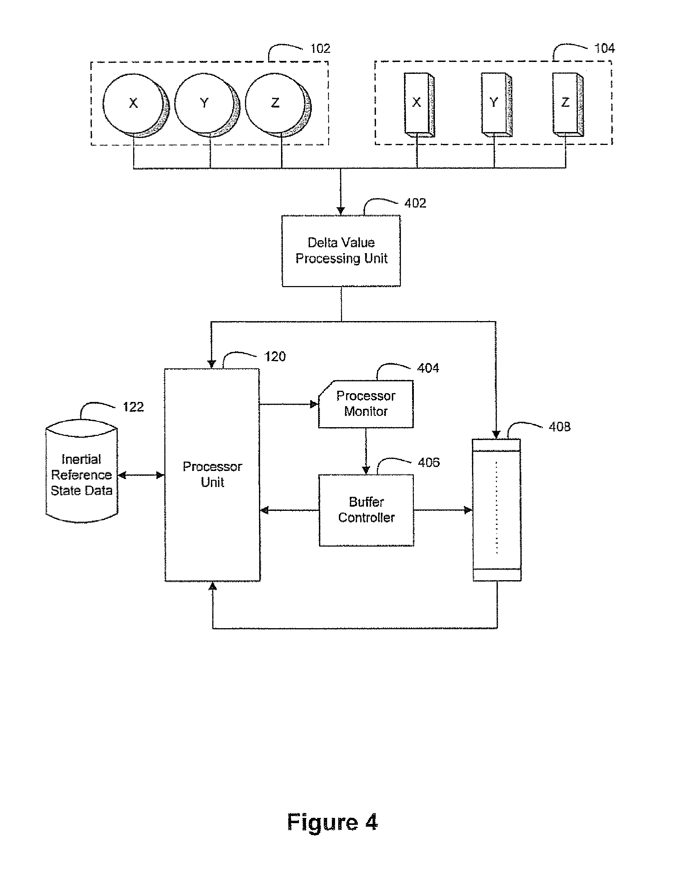

Figure 4 shows an integrating processing system that has the ability to recover from a processor reset without loss of externally measured data, according to an exemplary embodiment. The integrating processing system may be an IRS in an ADIRS, or other system that integrates input data at regular intervals. The system may comprise one or more sets of sensors 102, 104, each of which may measure a rate of change in the various system states, One set of sensors may comprise three gyroscopes 102, each fixed along a different spatial axis, in order to measure the angular rotation of the system with respect to each spatial axis. These gyroscopes may be laser ring gyroscopes, or another type of device that can measure angular rotation along a spatial axis. Another set of sensors may comprise three accelerometers 104, each fixed along a different spatial axis, in order to measure the linear acceleration of the system along each spatial axis. These accelerometers may be micro-electro-mechanical system (MEMS) devices, or other type of device that can measure linear acceleration. Data measurements from the sets of sensors 102, 104 may be sampled at a regular frequency, where the frequency has a corresponding regular period. Generally, this sampling frequency may be a relatively high rate, such as 800 Hz (1.25 ms period), to accurately sample the continuous data readings of the external sensors. The sampled data from these sensors may constitute a set of sensor data values corresponding to the measurements of all external sensors at a given moment.

The measured sets of data from the sensors may then be sent to a delta value processing unit 402 to be transformed into corresponding sets of delta values. The calculated set of delta values may be determined by multiplying measured data values by the period of the sampling frequency of the system. In a system comprising linear accelerometers and gyroscopes, the linear acceleration and rotational rate data values may yield delta velocity and delta theta values, respectively- The delta velocity values represent the change in velocity of the system, while the delta theta values represent changes in the rotational angles of the system.

Each set of sensor data may then be sent to a processor unit 120 and a temporary buffer unit 408. The processor unit 120 may comprise at least one processor and at least one memory. Stored in the memory and executable by the processor may be code for integrating single sets of measured date. In the case of an IRS, stored in the memory and executable by the processor may be code for determining changes in the relationship between the coordinate frames based on input delta values. The processor unit 120 may apply these delta values to a stored set of system state variables in order to determine changes in the attitude of the system and changes in the relationship between the reference frames. Also stored in the memory and executable by the processor may be code for batch processing multiple sets of delta values and applying these delta values to the various system state variables.

A processor monitor 404 may monitor the processor unit 120 to determine if the operating system is currently operational. The processor monitor 404 may comprise a watchdog timer that may be reset by the processor unit at given intervals. The watchdog timer may comprise a counter that is incremented at a relatively high rate, and that triggers an alarm if a given threshold value is exceeded. As a result, the watchdog timer must occasionally receive an external signal that forces the counter to reset. When the operating system of the processor unit is functioning normally it may generate a periodic signal that resets the watchdog timer counter before the threshold is reached or exceeded. If the value of the watchdog timer ever exceeds a given value, the processor monitor 404 may determine that the operating system has encountered an error that is preventing it from resetting the watchdog timer. This error may be the result of the system encountering a bad instruction caused by an SEU error, which may in turn cause the operating system to hang for an extended period of time, requiring an operating system reset.

Although the described examples describe process monitor 404 as including a watchdog timer, process monitor 404 is not limited to exclusively include a watchdog timer. Process monitor 404 may be designed to include different or additional features that may determine if an operating system is currently operational. For example, processor monitor 404 could also include operating system exception handlers that would be non-recoverable such as an invalid instruction monitor.

As described above, if the processor monitor 404 determines that the processor unit 120 has ceased functionality, possibly due to a reset, the buffer controller 406 may signal a temporary buffer 408 to begin accepting sets of delta values from the delta value processing unit 402. The temporary buffer 408 may continue to receive and store sets of data until the process monitor has determined that the processor unit 120 has finished resetting to the point where it can begin processing measured data again. At this point, the buffer controller 406 may cause the temporary buffer 408 to begin sending the buffered delta values to the processor unit. The processor unit may then batch process the delta values to determine a set of accumulated delta values, where the accumulated delta values represent the total changes to the system state values that occurred over the period that the integrating processing system was unavailable. With the accumulated delta values and the state data recorded prior to the operating system outage, the integrating computations may resume immediately with little or no appreciable loss of performance. In the case of an ADIRU system where the attitude and navigation integrating functions of the IRS are affected by the processing unit outage, the accumulated delta values will comprise changes to the velocity and rotational bearing of the system that occurred over the period during which the system was unavailable for processing. These changes may then be applied to the stored inertial reference state data to provide updated attitude and bearing information. The updated state values may then be restored in the external memory system 122. In other examples, the temporary buffer controller 408, may be located in the delta value processing unit 402 or processing unit 120. Additionally, the temporary buffer controller 408 should be SEU tolerant, by EDEC for example.

In one embodiment, the system may maintain a count of the number of times the operating system has been reset, causing normal operation to be interrupted. The processor monitor 404 may maintain a system restart count that is incremented each time it is determined that the processor has been restarted. If the processor monitor 404 comprises a watchdog timer, then the system restart count may be incremented each time the processor unit fails to reset the watchdog timer counter before it reaches its threshold. Each time the system restart count is incremented, it may be compared to a system restart count threshold. If at any point the system restart count exceeds its threshold, the system may generate a failure alert.

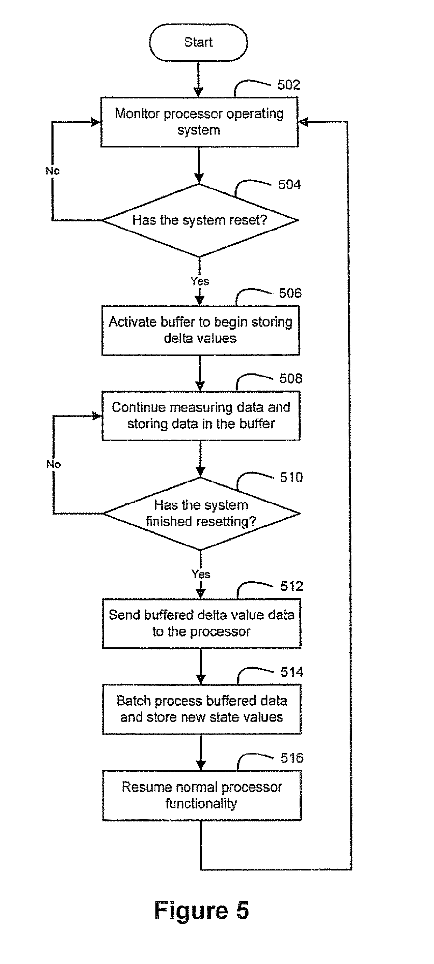

Figure 5 shows a process by which the reset of an integrating processor, such as may be caused by an SEU error, may be handled by an integrating system with little to no appreciable loss of data_ The integrating system may receive sets of delta values calculated from sensor data measurements, These delta values may then be applied to a set of delta values in order to determine the current state of the system based on the sensor data measurements. The system may begin in a state where it is monitoring the operating system of the processor to determine if the system has been forced to reset because of an error, such as may be caused by an SEU 502. If the system has been forced to reset or is otherwise unavailable 504, the system may continue to periodically measure sets of data values using its sensors and a temporary buffer may be activated in order to store the sets delta values calculated from the measured sets of data values 506. Once it has been determined that the operating system has finished resetting and has resumed its function of processing sets of delta values 510, the accumulated sets of delta values stored in the temporary buffer may be sent to the processor unit 512. The processor unit 512 may then batch process the accumulated sets of delta values and determine a single set of delta values that correspond to the changes in the system during the period that the processor unit 512 was unable to process data. This single set of delta values may then be applied to a stored set of system state values in order to determine the current state of the system. These updated state values may then be stored in a memory for future use 514. Following this process, the normal functionality of the processor unit 512 and the system may be resumed with little or no appreciable loss of data. In the case where the integrating system is an IRS in an ADIRU, the sets of delta values may comprise delta velocity and delta theta values derived from accelerometer and gyroscope sensors readings, respectively.

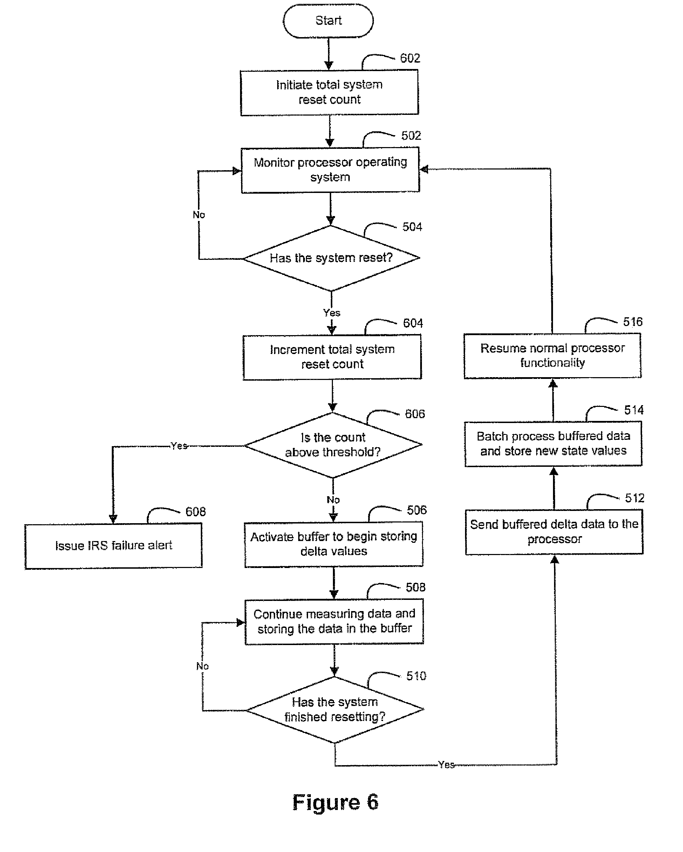

Figure 6 shows a process by which the reset of an integrating processor, such as may be caused by an SEU error, may be handled by an integrating system with little to no appreciable loss of data, and by which the number of times an integrating processor has been reset may be monitored. The system is similar to the process of Figure 5 but includes several additional steps that permit the number of system resets to be monitored and compared to a threshold value. During initialization of the system a total system reset count may be initialized to zero 602. Each time it is determined that the system has been reset or is otherwise unavailable for processing 504, the total system reset count may be incremented 604, After being incremented, the total system reset count may be compared to a threshold value 606. If the total system reset count exceeds its associated threshold, then an integrating system failure alert may be issued 608.

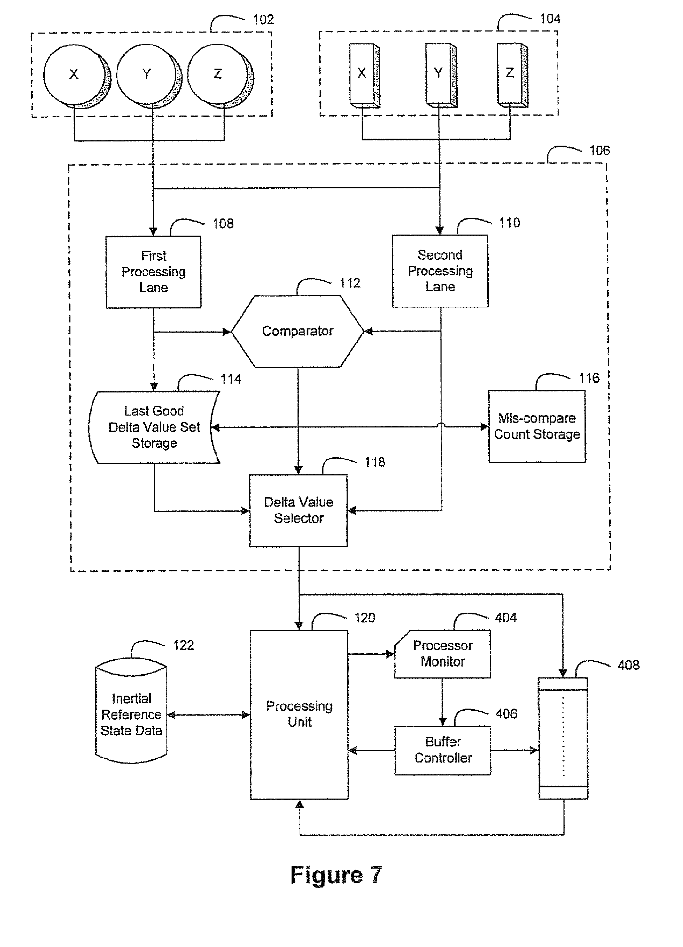

Figure 7 shows an integrating process system that can recover with little or no appreciable loss of data in the event of an SEU error that either affects hardware processing lanes, or causes a processor reset, or both. The integrating processing system may be an IRS in an ADIRS, or other system that integrates input data at regular intervals. The system may comprise a delta value processing unit 106 similar to the system of Figure 3 that features two separate delta value processing lanes. Additionally, the system may comprise a temporary buffer and control system in order to accumulate calculated delta values in the event that the processing unit becomes temporarily disabled, such as during an operating system reset.

In the combined SEU protection system, data may be measured through various external sensors 102, 104 that are generally immune to SEU errors. Data measurements from the sets of sensors 102, 104 may be sampled at a regular frequency, where the frequency has a corresponding regular period. The sampled data from these sensors may constitute a set of sensor data values corresponding to the measurements of all external sensors at a given moment.

Each set of sensor data values may then be sent to two separate processing lanes 108, 110. Each of these processing lanes may independently calculate a set of delta values corresponding to a set of sensor data values. Delta values corresponding to measured angular rotational rates may be considered delta theta values, while delta values corresponding to measured linear acceleration rates may be considered delta velocity values. The entire set of delta values may comprise three delta theta values and three delta velocity values in the case where the sensors 102, 104 comprise three gyroscopes and three accelerometers. The set of delta values may be determined by multiplying the linear acceleration and rotational rate data values from the sensors by the period of the sampling frequency. The delta velocity values may then represent the change in velocity of the system over the sampling period, while the delta theta values may represent changes in the rotational bearing of the system over the sampling period.

Once each processing lane 108, 110 is finished calculating its set of delta values, these values are then sent to a comparator 112. The comparator compares the first set of delta values received from the first processing lane to the second set of delta values received from the second processing lane and generates a signal indicative of whether or not an SEU error has occurred. This signal is then sent to a delta value selector 118 that determines which set of delta values to forward to a processing unit 120. If the delta values in the first set of values are not equal to the corresponding delta values of the second set, then the comparator may generate a signal that indicates an SEU error has occurred in one of the processing lanes. Upon receiving this error signal, the delta value selector 118 may select a previously calculated set of delta values stored in the last-known-good buffer 114. This buffered set of delta values represents the last set of delta values calculated by the processing lanes without an SEU error having been detected, or the last-known-good delta value set. This stored data may be replaced with a more recent set of valid data each time the sets of delta values from the first processing lane and second processing lane are substantially equal. In the case that the delta values in the first set values are substantially equal to the corresponding delta values in the second set, the comparator 112 may generate a signal indicating that no SEU error has occurred in either processing lane and that either set of delta values is valid. Upon receiving this signal, the delta value selector 118 may then select one of the sets of data values from either the first or second processing lane to send to both the processing unit 120 and a temporary FIFO storage buffer 408. Additionally, the signal generated by the comparator will be sent to the buffer 114 that contains the last known good delta value set. If the signal indicates that no error was detected, the set of delta values from either the first or second processing lane may be stored in the buffer, overwriting the previously stored set.

In one embodiment of the combined system, the signal generated by the comparator may be sent to an error count unit 116. If the sets of delta values generated by the first and second processing lanes do not compare, or mis-compare, then a signal indicating this error may cause the error count unit 116 to adjust one or more count values. A total mis-compare count, or total error count, may be incremented by the error count unit 116 for each signal received from the comparator indicating a lane mis-compare. Additionally, a consecutive mis-compare count may be maintained. The consecutive mis-compare count may be incremented for each signal received from the comparator indicating a lane mis-compare, and may be cleared, or set to zero, for each signal received from the comparator indicating a match between the sets of delta values generated by each of the processing lanes 108, 110. Furthermore, stored within the error count unit 116 may be respective threshold values for the total mis-compare count and consecutive mis-compare count- If either of these thresholds are met or exceeded, the system may generate a failure alert.

As discussed above, the set of delta values selected by the delta value set selector 118 is then provided to a processing unit 120 and to a temporary buffer unit 408. The processing unit 120 may comprise at least one processor and at least one memory- Stored in the memory and executable by the processor may be code for determining changes in the relationship between the coordinate frames based on input delta values. The processor unit may apply these delta values to a stored set of system state variables in order to determine changes in the attitude of the system and changes in the relationship between the reference frames. Also stored in the memory and executable by the processor may be code for batch processing multiple sets of delta values and applying these delta values to the various system state variables. The processing unit 120 may maintain a local copy of state values. For each set of delta values received by the processing unit, the locally stored state values may be adjusted according to the code stored in the memory. At regular intervals the state data may be stored in an external storage device 122. The frequency at which the state data is sent to an external storage device may be equal to or greater than the sampling frequency of the measurement devices, since the amount of time required for a memory access may be substantially larger than the period between data samples.

A processor monitor 404 may monitor the processor unit to determine if the operating system is currently operational. The processor monitor 404 may comprise a watchdog timer (or other type of error detection) that may be reset by the processor unit at given intervals. The watchdog timer may comprise a counter that is incremented at a relatively high rate, and that triggers an alarm if a given threshold value is exceeded. As a result, the watchdog timer must occasionally receive an external signal that forces the counter to reset When the operating system of the processor unit is functioning normally it may generate a periodic signal that resets the watchdog timer counter before the threshold is reached or exceeded. If the value of the watchdog timer ever exceeds a given value, the processor monitor 404 may determine that the operating system has encountered an error that is preventing it from resetting the watchdog timer. This error may be the result of the system encountering a bad instruction caused by an SEU error, which may in turn cause the operating system to hang for an extended period of time, requiring an operating system reset.

As described above, if the processor monitor 404 determines that the processor unit 120 has ceased functionality, possibly due to a reset, the buffer controller 406 may signal the temporary buffer 408 to begin accepting sets of delta values from the delta value processing unit 106. The temporary buffer 408 may continue to receive and store sets of data until the process monitor has determined that the processor unit has finished resetting to the point where it can begin processing measured data again. At this point, the buffer controller 406 may cause the temporary buffer 408 to begin sending the buffered delta values to the processor unit. The processor unit 120 may then batch process the delta values to determine a set of accumulated delta values, where the accumulated delta values represent the total changes to the system state values that occurred over the period that the integrating processing system was unavailable. With the accumulated delta values and the state data recorded prior to the operating system outage, the integrating computations may resume immediately with little or no appreciable loss of performance. In the case of an ADIRU system where the attitude and navigation integrating factions of the IRS are affected by the processing unit outage, the accumulated delta values will comprise changes to the velocity and rotational bearing of the system that occurred over the period during which the system was unavailable for processing. These changes may then be applied to the stored inertial reference state data to provide updated attitude and heading information. The updated state values may then be restored in the external memory system 122.

In one embodiment of the combined system, the system may maintain a count of the number of times the operating system has been reset, causing normal operation to be interrupted. The processor monitor 404 may maintain a system restart count that is incremented each time it is determined that the processor has been restarted. If the processor monitor comprises a watchdog timer, then the system restart count may be incremented each time the processor unit fails to reset the watchdog timer counter before it reaches its threshold- Each time the system restart count is incremented, it may be compared to a system restart count threshold. If at any point me system restart count exceeds its threshold the system may generate a failure alert.

Exemplary embodiments of the present invention relating to an integrating processing system with SEU error detection and recovery have been illustrated and described. It should be noted that the figures are not necessarily drawn to scale and are illustrative approximations of their respective embodiments. Similarly, it should also be noted that more significant changes in configuration and form are also possible and intended to be within the scope of the system taught herein. For example, lines of communication shown between modules in the schematic diagrams are not intended to be limiting, and alternative lines of communication between system components may exist.

It should be understood that the programs, processes, methods, and apparatus described herein are not related or limited to any particular type of processor, computer, or network apparatus (hardware or software), unless otherwise indicated. Various types of general purpose or specialized processors, or computer apparatus may be used with or perform operations in accordance with the teachings described herein. While various elements of the preferred embodiments may have been described as being implemented in hardware, in other embodiments software or firmware implementations may alternatively be used, and vice-versa.

Finally, in view of the wide variety of embodiments to which the principles of the present invention can be applied, it should be understood that the illustrated embodiments are exemplary only, and should not be taken as limiting the scope and spirit of the present invention. For example, the steps of the flow diagrams may be taken in sequences other than those described, and more, fewer, or other elements may be used in the block diagrams. The claims should not be read as limited to the described order or elements unless stated to that effect. It will be understood that variations in form and detail may be made to the invention without deviating from the spirit and scope of the invention, as defined by the following claims.

## Claims

1. A method for autonomously detecting and recovering from a single event upset in an integrating avionic system, the method comprising:
determining a first set of delta values using a first processing lane;
determining a second set of delta values using a second processing lane;
comparing the first set of delta values to the second set of delta values;
utilizing a stored set of delta values for processing if the first set of delta values are not substantially equal to the second set of delta values; and
utilizing at least one of the first set of delta values or the second set of delta values for processing if the first set of delta values is substantially equal to the second set of delta values.

2. The method of claim 1 wherein the first set of delta values and the second set of delta values each comprise a delta velocity value and a delta theta value.

3. The method of claim 1 further comprising measuring an acceleration rate and a rotation rate of the system, and wherein the first set of delta values and the second set of delta values are determined from the acceleration rate and the rotation rate.

4. The method of claim 3 wherein measuring an acceleration rate and a rotation rate occurs once every sampling period, and wherein processing comprises integrating a set of delta values over the sampling period.

5. The method of claim 1 further comprising storing at least one of the first set of delta values or the second set of delta values as the stored set of delta values if the first set of delta values is substantially equal to the second set of delta values.

6. The method of claim 1 further comprising:
initiating a consecutive lane mis-compare count and a total lane mis-compare count;
incrementing the consecutive lane mis-compare count and the total lane mis-compare count if the first set of delta values are not substantially equal to the second set of delta values;
determining if the consecutive lane mis-compare count is above a consecutive lane mis-compare threshold;
determining if the total lane mis-compare count is above a total lane mis-compare threshold; and
issuing a failure alert if either the consecutive lane mis-compare or the total mis-compare count is above its respective threshold.

7. The method of claim 6 further comprising setting the consecutive lane mis-compare count to zero if the first set of delta values is substantially equal to the second set of delta values.
